# EUROPÄISCHE PATENTSCHRIFT

(11) **EP 3 851 013 B1**
(45) Veröffentlichungstag und Bekanntmachung des Hinweises auf die Patenterteilung: **15.11.2023**
(21) Anmeldenummer: 21155732.7
(22) Anmeldetag: 20.06.2018
(51) Int. Cl.: A47L 9/20

(54) **FILTERABREINIGUNG**
FILTER CLEANING
NETTOYAGE DE FILTRE

(30) Priorität: 29.06.2017 EP 17178621
(43) Veröffentlichungstag der Anmeldung: 21.07.2021
(62) Teilanmeldung aus: 18730407.6
(73) Patentinhaber: Hilti Aktiengesellschaft, 9494 Schaan (LI)
(72) Erfinder: Ohlendorf, Oliver, 86899 Landsberg am Lech (DE)
(74) Vertreter: Hilti Aktiengesellschaft Corporate Intellectual Property

(56) Entgegenhaltungen:
- DE-A1- 10 101 219
- DE-A1-102010 045 979
- DE-U1-202007 015 242
- US-A1- 2012 090 640

## Beschreibung

Die vorliegende Erfindung betrifft eine Filtereinrichtung für einen Staubsauger, mit einer Turbineneinrichtung zum Erzeugen wenigstens eines ersten und zweiten Hauptluftstroms durch mindestens einen Teilbereich des Staubsaugers sowie einer Steuerungseinheit. Eine Filtereinrichtung für einen Staubsauger gemäß dem Oberbegriff des Anspruch 1 ist z.B. aus der US 2012 090 640 A bekannt.

Auf Baustellen werden oftmals Staubsauger verwendet, um Schmutzpartikel in Form von Staub, Bohrmehl oder dergleichen aufzusaugen.

Zum Aufsammeln des Schmutzes wird mittels einer Turbine ein Unterdruck im Inneren des Staubsaugers erzeugt. Über einen Schlauch, der mit dem Staubsauger verbunden ist, wird der Unterdruck genutzt, um Schmutzpartikel aufzusaugen und in einen Auffangbehälter des Staubsaugers zu transportieren. Handelsübliche Staubsauger sind gewöhnlich so aufgebaut, dass die Turbine, ein Filter, der Auffangbehälter sowie die Eintrittsöffnung für die angesaugten Schmutzpartikel hintereinander bzw. auf einem Strömungspfad liegen. Es ist dabei bedeutend, dass zwischen dem Auffangbehälter bzw. der Eintrittsöffnung für die angesaugten Schmutzpartikel und der unterdruckerzeugenden Turbine der Filter positioniert ist. Da die angesaugte mit Schmutzpartikeln angereicherte Luft durch die Turbine strömen würde und folglich die Turbine verschmutzen bzw. beschädigen würde, dient der Filter zur Reinigung der angesaugten Luft und damit insbesondere zum Schutz der Turbine.

Ein Problem entsteht hierbei jedoch, wenn der Filter keine ausreichende Filterfunktion mehr leisten kann und angesaugte Schmutzpartikel nicht mehr aus der durch den Filter strömenden Luft herausgefiltert werden können. Dies ist insbesondere der Fall, wenn aufgrund eines länger andauernden Einsatzes des Staubsaugers der Filter zunehmend verschmutzt, d.h. mit Schmutzpartikeln angefüllt ist. Um den Filter funktionsfähig zu halten, muss dieser zwischenzeitlich gereinigt und von den aufgenommenen Schmutzpartikeln befreit wurde. Zur Reinigung des Filters muss jedoch der Staubsauger abgeschaltet, geöffnet und der Filter zur Entfernung der aufgenommenen Schmutzpartikel entnommen werden. Derartige Aktivitäten unterbrechen jedoch den Staubsaugvorgang und sind sehr zeitraubend.

Gemäß dem Stand der Technik existieren auch bereits Staubsauger, die eine Vorrichtung zur Abreinigung des Filters aufweisen, ohne dass der Staubsauger hierzu abgeschaltet, geöffnet und der Filter zur Entfernung der aufgenommenen Schmutzpartikel entnommen werden muss. Nachteilig an derartigen Vorrichtungen ist jedoch, dass auch bei diesen Staubsaugern der Staubsaugvorgang während der Abreinigung des Filters unterbrochen werden muss. Auch hierdurch verlängert sich die Arbeit mit dem Staubsauger.

Aufgabe der vorliegenden Erfindung ist es daher das vorstehend beschriebene Problem zu lösen und eine verbesserte Filtereinrichtung für einen Staubsauger bereitzustellen, mit der ein Staubsaugvorgang während der Abreinigung des Filters nicht unterbrochen wird und dadurch eine Zeitersparnis für den Anwender des Staubsaugers bedeutet.

Die Aufgabe wird gelöst durch den Gegenstand des unabhängigen Anspruchs 1. Vorteilhafte Ausführungsformen des erfindungsgemäßen Gegenstands sind in den abhängigen Ansprüchen enthalten.

Die Aufgabe wird dabei gelöst durch eine Filtereinrichtung für einen Staubsauger, mit einer Turbineneinrichtung zum Erzeugen wenigstens eines ersten und zweiten Hauptluftstroms durch mindestens einen Teilbereich des Staubsaugers sowie einer Steuerungseinheit.

Erfindungsgemäß verfügt die Filtereinrichtung über eine erste Kammer mit einem ersten Filterelement, einer ersten Ausströmöffnung, einer ersten Zuströmöffnung und ein erstes Druckstoßelement, welches die erste Kammer in einen ersten und zweiten Raum unterteilt und reversibel zwischen einer ersten und zweiten Position bewegbar ist; und eine zweite Kammer mit einem zweiten Filterelement, einer zweiten Ausströmöffnung, einer zweiten Zuströmöffnung und ein zweites Druckstoßelement, welches die zweite Kammer in einen ersten und zweiten Raum unterteilt und reversibel zwischen einer ersten und zweiten Position bewegbar ist. Hierdurch wird der Staubsaugvorgang während der Abreinigung des Filters nicht unterbrochen und der Anwender kann weiterhin Schmutzpartikel mit dem Staubsauger aufsaugen.

In einer bevorzugten Ausgestaltung der Erfindung kann der erste Hauptluftstrom durch das erste Filterelement in den ersten Raum der ersten Kammer einströmbar und aus der ersten Ausströmöffnung wieder ausströmbar sein.

Darüber hinaus kann der zweite Hauptluftstrom durch das zweite Filterelement in den ersten Raum der zweiten Kammer einströmbar und aus der zweiten Ausströmöffnung wieder ausströmbar sein.

Es ist im Sinne der Erfindung ferner bevorzugt, dass die erste Ausströmöffnung und das erste Filterelement so an dem ersten Raum der ersten Kammer positioniert sind, dass ein von dem ersten Hauptluftstrom erzeugbarer Unterdruck das erste Druckstoßelement in die erste Position bewegt, und die zweite Ausströmöffnung und das zweite Filterelement so an dem ersten Raum der zweiten Kammer positioniert ist, dass ein von dem zweiten Hauptluftstrom erzeugbarer Unterdruck das zweite Druckstoßelement in die erste Position bewegt.

Vorzugsweise ist die erste Zuströmöffnung so an dem zweiten Raum der ersten Kamme positioniert ist, dass ein durch die Zuströmöffnung auf den zweiten Raum der ersten Kamme wirkender atmosphärischer Druck das erste Druckstoßelement in die zweite Position bewegt, wodurch ein Impuls von dem ersten Druckstoßelement auf das erste Filterelement übertragen wird zur schlagartigen Abreinigung des ersten Filterelements. Es ist im Sinne der Erfindung bevorzugt, dass die zweite Zuströmöffnung so an dem zweiten Raum der zweiten Kammer positioniert ist, dass ein durch die zweite Zuströmöffnung auf den zweiten Raum der zweiten Kammer wirkender atmosphärischer Druck das zweite Druckstoßelement in die zweite Position bewegt, wodurch ein Impuls von dem zweiten Druckstoßelement auf das zweite Filterelement übertragen wird zur schlagartigen Abreinigung des zweiten Filterelements. Vorzugsweise können das erste Druckstoßelement und das zweite Druckstoßelement abwechselnd reversibel von der ersten in die zweite Position zur abwechselnden Abreinigung des ersten und zweiten Filterelements bewegt werden.

Gemäß einer vorteilhaften Ausführungsform der vorliegenden Erfindung kann es möglich sein, dass das abwechselnde reversible Bewegen des ersten und das zweite Druckstoßelements von der ersten in die zweite Position durch die Steuerungseinheit geregelt ist. Hierdurch kann die Anzahl bzw. Frequenz der Intervalle zur Abreinigung der Filter genau gesteuert werden.

Gemäß einer weiteren alternativen Ausführungsform kann ein Sensor zur Messung des Luftstroms in dem ersten Raum der ersten und/oder zweiten Kammer enthalten sein, mit dem der Verschmutzungsgrad des jeweiligen Filters ermittelt werden kann. Der Sensor ist mit der Steuerungseinheit verbunden und sendet ein entsprechendes Signal bezüglich des Verschmutzungsgrads des jeweiligen Filters an die Steuerungseinheit. Die Steuerungseinheit enthält des Weiteren eine Logikeinheit und/oder eine Lock-Up-Tabelle, mit denen der Verschmutzungsgrad des jeweiligen Filters interpretiert und ggf. eine sofortige Abreinigung des jeweiligen Filters erzeugt werden kann.

Gemäß einer weiteren vorteilhaften Ausführungsform der vorliegenden Erfindung kann es möglich sein, dass eine erste Zuströmleitung mit einem ersten Ventil und eine zweite Zuströmleitung mit einem zweiten Ventil enthalten sind, wobei die erste Zuströmöffnung durch die erste Zuströmleitung und die zweite Zuströmöffnung durch die zweite Zuströmleitung mit der Umgebungsluft verbindbar ist und wobei durch das erste Ventil die erste Zuströmleitung und das zweite Ventil die zweite Zuströmleitung verschließbar ist. Hierdurch kann auf einfache Art und Weise eine Verbindung von dem jeweiligen zweiten Raum der ersten oder zweiten Kammer zu der Umgehungsluft des Staubsaugers und damit eine Verbindung zu einem atmosphärischen Druckverhältnis erzeugt werden.

Es ist dabei möglich, dass das erste und/oder zweite Ventil mit der Steuerungseinheit verbunden ist, sodass die Steuerungseinheit das erste und/oder zweite Ventil bzw. die Durchströmungsöffnung des ersten und/oder zweiten Ventils steuern bzw. regeln kann. Hierdurch kann zentral über die Steuerungseinheit sowie individuell das erste und/oder zweite Ventil gesteuert werden.

Gemäß einer weiteren vorteilhaften Ausführungsform der vorliegenden Erfindung kann es möglich sein, dass ein erstes und zweites Rückhalteelement enthalten ist, wobei durch das erste Rückhalteelement das erste Druckstoßelement in der ersten Position und das zweite Rückhalteelement das zweite Druckstoßelement in der ersten Position gehalten werden kann. Es ist dabei möglich, dass das erste Rückhalteelement in dem zweiten Raum der ersten Kammer und dass das zweite Rückhalteelement in dem zweiten Raum der zweiten Kammer positioniert ist.

Durch das Rückhalteelement wird eine Rückhaltekraft für das jeweilige Druckstoßelement erzeugt, sodass in dem jeweiligen zweiten Raum der ersten oder zweiten Kammer ein höherer Luftdruck durch die jeweilige Zuströmleitung aufgebaut werden kann, bevor das Druckstoßelement von der ersten Position in die zweite Position bewegt wird. Entsprechend der gewählten Rückhaltekraft des Rückhalteelements kann auch der durch das Druckstoßelement erzeugte Impuls, der auf das jeweilige Filterelement zur Abreinigung wirkt, erhöht werden. Durch einen erhöhten Impuls ist auch die Abreinigung verbessert.

Gemäß einer weiteren vorteilhaften Ausführungsform der vorliegenden Erfindung kann es möglich sein, dass das erste und/oder zweite Rückhalteelement in Form einer Feder ausgestaltet ist. Hierdurch kann auf einfache Art und Weise das Rückhalteelement realisiert werden. Die Feder kann dabei in Form einer Druckfeder ausgestaltet sein, die in dem ersten Raum positioniert ist und das Druckstoßelement in eine Richtung drückt. Des Weiteren kann die Feder auch in Form einer Zugfeder ausgestaltet sein, die in dem zweiten Raum positioniert ist und das Druckstoßelement in eine Richtung zieht.

Gemäß einer weiteren vorteilhaften Ausführungsform der vorliegenden Erfindung kann es möglich sein, dass das erste und/oder zweite Rückhalteelement in Form eines Magneten ausgestaltet ist. Hierdurch kann auf einfache Art und Weise ein nahezu maximaler Druck in dem zweiten Raum erzeugt werden, bevor das jeweilige Druckstoßelement schlagartig von der ersten in die zweite Position bewegt wird. Ein von dem Druckstoßelement erzeugter Impuls zur Abreinigung des Filterelements ist dadurch nahezu maximal.

Gemäß einer weiteren vorteilhaften Ausführungsform der vorliegenden Erfindung kann es möglich sein, dass ein erster und zweiter Verbindungskanal enthalten ist, wobei der erste Verbindungskanal die Turbineneinrichtung und die erste Zuleitung verbindet, um den Luftdruck mit Hilfe der Turbineneinrichtung in dem zweiten Raum der ersten Kammer zu erhöhen und wobei der zweite Verbindungskanal die Turbineneinrichtung und die zweite Zuleitung verbindet, um den Luftdruck mit Hilfe der Turbineneinrichtung in dem zweiten Raum der zweiten Kammer zu erhöhen. Hierdurch kann mit Hilfe der Turbineneinrichtung ein Unterdruck in dem jeweiligen zweiten Raum erzeugt werden, um das Druckstoßelement schneller wieder von der zweiten Position in die erste Position zu bewegen.

Gemäß einer weiteren vorteilhaften Ausführungsform können die Verbindungskanäle über ein Ventil gesteuert oder geregelt werden. Die Steuerung bzw. Regelung erfolgt durch die Steuerungseinheit.

Des Weiteren kann ein erster Drucksensor verbunden mit der Steuerungseinheit in dem zweiten Raum der ersten Kammer sowie ein zweiter Sensor verbunden mit der Steuerungseinheit in dem zweiten Raum der zweiten Kammer enthalten sein, mit dem der Luftdruck in dem jeweiligen zweiten Raum messbar ist. Hierdurch wird der Wert des Luftdrucks in dem jeweiligen zweiten Raum an die Steuerungseinheit geleitet, sodass die Steuerungseinheit zur Erhöhung des Luftdrucks das erste und/oder zweite Ventil öffnet oder weiter öffnet. Alternativ kann die Steuerungseinheit hierdurch einen Luftdruck aus der Turbineneinrichtung über den ersten und/oder zweiten Verbindungskanal in den jeweiligen zweiten Raum strömen lassen. Die Steuerungseinheit ist hierzu mit der Turbineneinrichtung verbunden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Seitenansicht auf einen Staubsauger mit einer erfindungsgemäßen Filtereinrichtung gemäß einer ersten Ausführungsform;
- Fig. 2: eine weitere schematische Seitenansicht auf den Staubsauger mit der erfindungsgemäßen Filtereinrichtung gemäß der ersten Ausführungsform, wobei sich ein erstes und zweites Druckstoßelement in einer ersten Position befinden und ein erstes und zweites Ventil geschlossen sind;
- Fig. 3: eine weitere schematische Seitenansicht auf den Staubsauger mit der erfindungsgemäßen Filtereinrichtung gemäß der ersten Ausführungsform, wobei sich das erste und zweite Druckstoßelement in der ersten Position befinden und das erste Ventil geöffnet und das zweite Ventil geschlossen ist;
- Fig. 4: eine weitere schematische Seitenansicht auf den Staubsauger mit der erfindungsgemäßen Filtereinrichtung gemäß der ersten Ausführungsform, wobei sich das erste Druckstoßelement zwischen der ersten und zweiten Position befindet;
- Fig. 5: eine weitere schematische Seitenansicht auf den Staubsauger mit der erfindungsgemäßen Filtereinrichtung gemäß der ersten Ausführungsform, wobei sich das erste Druckstoßelement in der zweiten Position befindet, sodass das erste Filterelement gereinigt wird;
- Fig. 6: eine weitere schematische Seitenansicht auf den Staubsauger mit der erfindungsgemäßen Filtereinrichtung gemäß der ersten Ausführungsform, wobei das erste und zweite Ventil geschlossen sind und sich das erste Druckstoßelement von zweiten in die erste Position bewegt;
- Fig. 7: eine weitere schematische Seitenansicht auf den Staubsauger mit der erfindungsgemäßen Filtereinrichtung gemäß der ersten Ausführungsform, wobei das erste und zweite Ventil geschlossen sind und sowohl das erste als auch zweite Druckstoßelement sich in der ersten Position befinden;
- Fig. 8: eine weitere schematische Seitenansicht auf den Staubsauger mit der erfindungsgemäßen Filtereinrichtung gemäß der ersten Ausführungsform, wobei das zweite Ventil geöffnet ist und sich das zweite Druckstoßelement zwischen der ersten und zweiten Position befindet;
- Fig. 9: eine weitere schematische Seitenansicht auf den Staubsauger mit der erfindungsgemäßen Filtereinrichtung gemäß der ersten Ausführungsform, wobei sich das zweite Druckstoßelement in der zweiten Position befindet, sodass das zweite Filterelement gereinigt wird;
- Fig. 10: eine weitere schematische Seitenansicht auf den Staubsauger mit der erfindungsgemäßen Filtereinrichtung gemäß der ersten Ausführungsform, wobei das erste und zweite Ventil geschlossen sind und sich das zweite Druckstoßelement von zweiten in die erste Position bewegt;
- Fig. 11: eine weitere schematische Seitenansicht auf den Staubsauger mit der erfindungsgemäßen Filtereinrichtung gemäß der ersten Ausführungsform, wobei das erste und zweite Ventil geschlossen sind und sowohl das erste als auch zweite Druckstoßelement der ersten Position befinden;
- Fig. 12: eine weitere schematische Seitenansicht auf den Staubsauger mit der erfindungsgemäßen Filtereinrichtung gemäß der ersten Ausführungsform, wobei sich das erste Druckstoßelement in der zweiten Position befindet, sodass das erste Filterelement gereinigt wird;
- Fig. 13: eine weitere schematische Seitenansicht auf den Staubsauger mit der erfindungsgemäßen Filtereinrichtung gemäß einer zweiten Ausführungsform;
- Fig. 14: eine weitere schematische Seitenansicht auf den Staubsauger mit der erfindungsgemäßen Filtereinrichtung gemäß einer dritten Ausführungsform;
- Fig. 15: eine weitere schematische Seitenansicht auf den Staubsauger mit der erfindungsgemäßen Filtereinrichtung gemäß einer vierten Ausführungsform;
- Fig. 16: eine schematische Seitenansicht auf den Staubsauger mit der erfindungsgemäßen Filtereinrichtung gemäß einer fünften Ausführungsform; und
- Fig. 17: eine weitere schematische Seitenansicht auf den Staubsauger mit der erfindungsgemäßen Filtereinrichtung gemäß der fünften Ausführungsform.

### Ausführungsbeispiele:

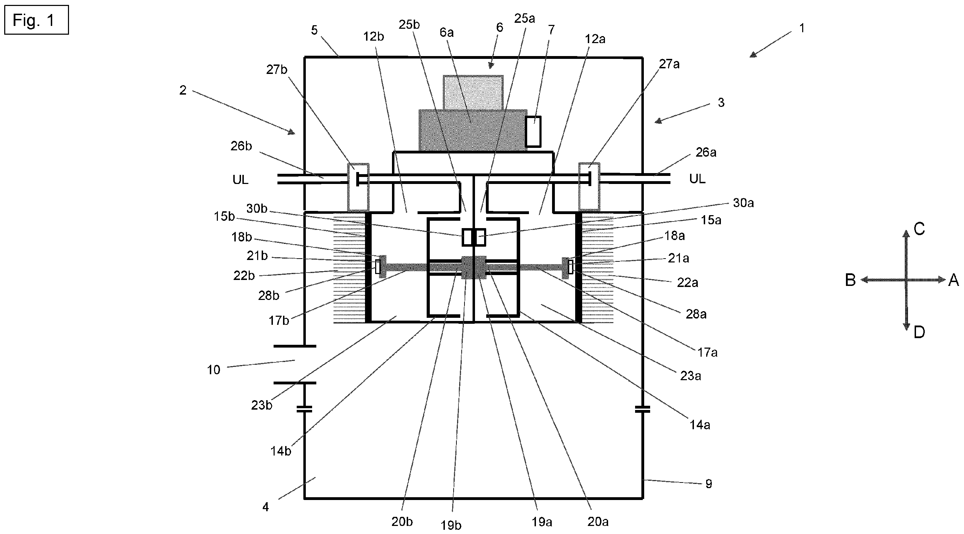

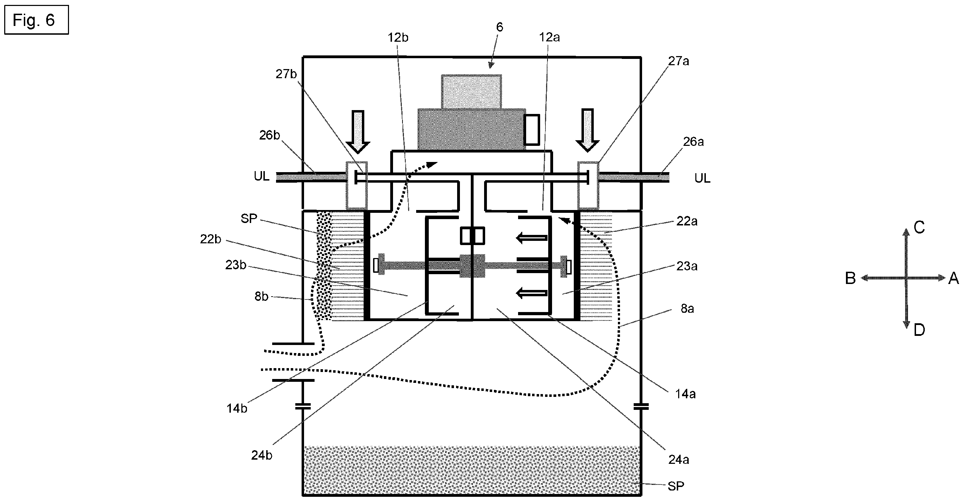

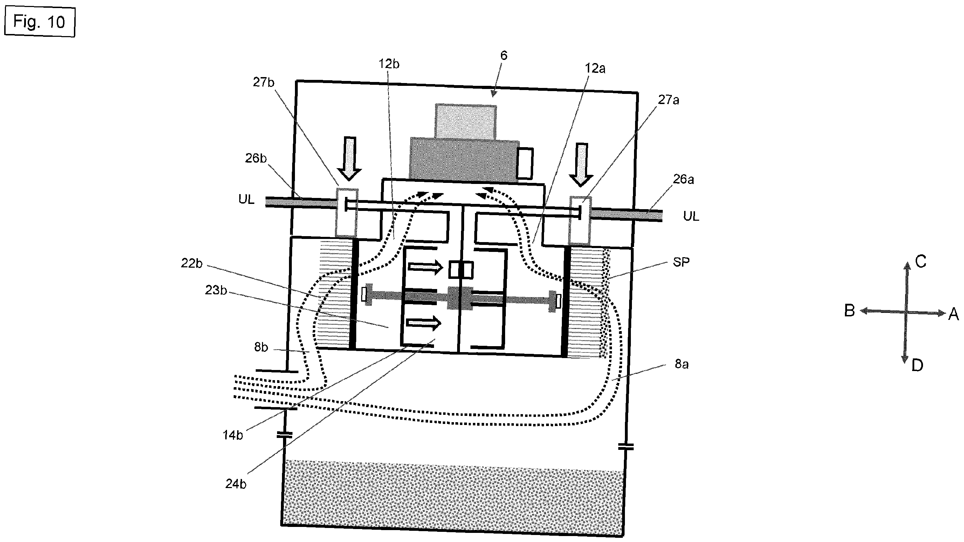

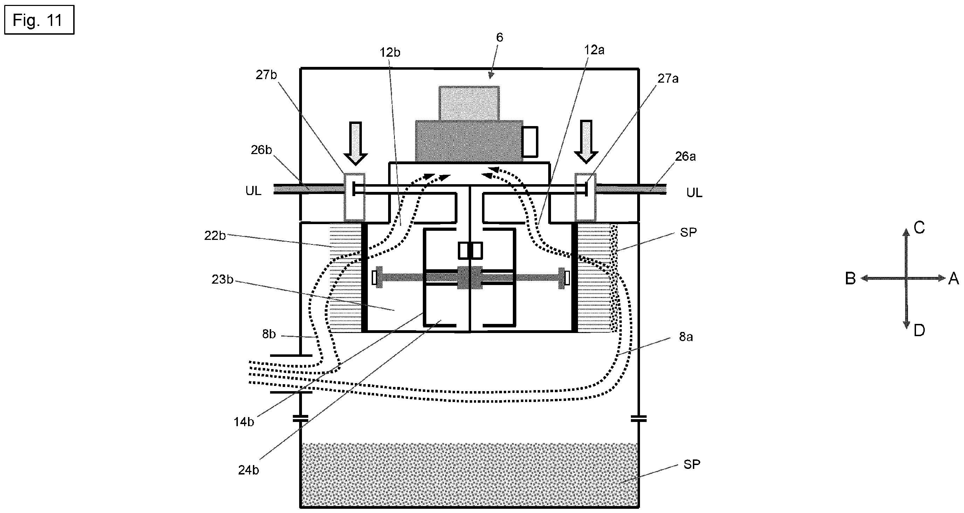

Fig. 1 bis 12 zeigt einen Staubsauger 1 mit einer erfindungsgemäßen Filtereinrichtung 2 gemäß einer ersten Ausführungsform.

Der Staubsauger 1 enthält im Wesentlichen einen Saugkopf 3 und ein Auffangbehälter 4 für Schmutzpartikel. Der Saugkopf 3 enthält wiederum im Wesentlichen ein Gehäuse 5, eine Turbineneinrichtung 6, die Filtereinrichtung 2 und eine Steuerungseinheit 7.

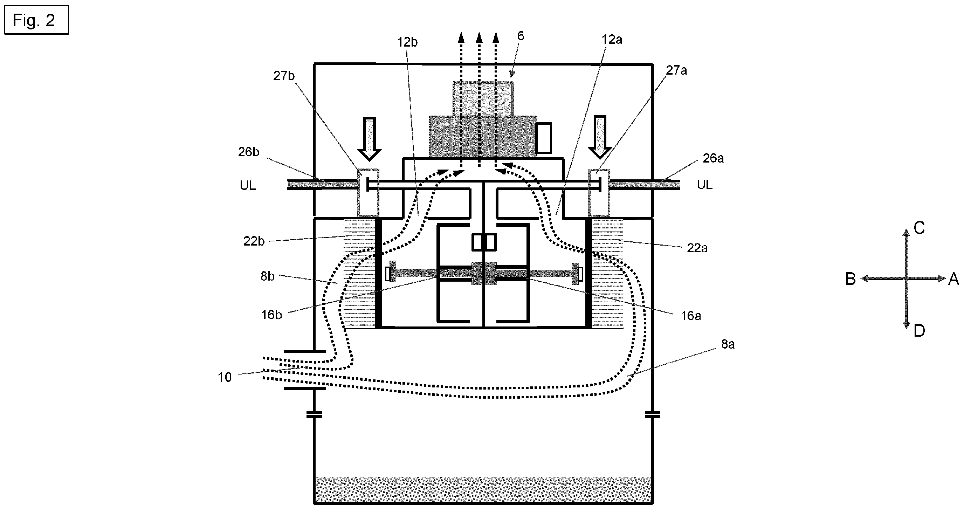

Die Turbineneinrichtung 6 dient zum Erzeugen eines ersten Hauptluftstroms 8a und zweiten Hauptluftstroms 8b. Sowohl der erste als auch der zweite Hauptluftstrom 8a, 8b strömt von dem Auffangbehälter 4 zu dem Saugkopf 3 durch die Turbineneinrichtung 6 und aus dem Gehäuse 5 (vgl. Fig. 2).

Die Steuerungseinheit 7 ist an einem Gehäuse 6a der Turbineneinrichtung 6 positioniert. Es jedoch auch möglich, dass die Steuerungseinheit 7 an jedem anderen möglichen Ort des Saugkopfs 3 positioniert ist. Darüber hinaus ist die Steuerungseinheit 7 so mit der Turbineneinrichtung 6 verbunden, dass die Funktion der Turbineneinrichtung 6 durch die Steuerungseinheit 7 gesteuert und geregelt werden kann.

Der Auffangbehälter 4 besteht im Wesentlichen aus einer Wanne 9 mit einer Einsaugöffnung 10. Alternativ kann der Auffangbehälter 4 auch ohne Einsaugöffnung ausgestaltet sein, sodass die angesaugte Luft mit Schmutzpartikeln SP durch eine dafür vorgesehene Öffnung in dem Saugkopf 3 und über eine entsprechende Leitung in den Auffangbehälter 4 einströmen kann. Bei einer derartigen Ausgestaltung kann ein Entsorgungsbeutel ohne ein entsprechendes Loch für eine Einsaugöffnung in den Auffangbehälter 4 eingelegt werden.

An die Einsaugöffnung 10 kann ein erstes Ende eines Staubsaugerschlauchs angeschlossen werden. Das zweite Ende des Staubsaugerschlauchs weist eine Schnittstelle für eine Düse (z.B. eine Bodendüse) oder eine Absaugvorrichtung an einer Werkzeugmaschine auf, mit der Schmutzpartikel aufgesaugt werden können. Mit Hilfe des ersten und zweiten Hauptluftstroms 8a, 8b wird Luft durch den Staubsaugerschlauch und damit die Schmutzpartikel SP angesaugt und in den Auffangbehälter 4 transportiert. Der Staubsaugerschlauch ist in den Figuren nicht dargestellt.

Die Filtereinrichtung 2 enthält eine erste Kammer 11a sowie eine zweite Kammer 11b. Sowohl die erste als auch die zweite Kammer 11a, 11b weist eine zylindrische Form auf. Es ist jedoch auch möglich, dass die erste Kammer 11a und/oder zweite Kammer 11b jede andere mögliche Form aufweist.

Die erste Kammer 11a enthält im Wesentlichen eine erste Ausströmöffnung 12a, eine erste Zuströmöffnung 25a, ein erstes Druckstoßelement 14a sowie eine erste Einströmöffnung 15a. Die zweite Kammer 11b enthält eine zweite Ausströmöffnung 12b, eine zweite Zuströmöffnung 25b, ein zweites Druckstoßelement 14b sowie eine zweite Einströmöffnung 15b.

Sowohl das erste als auch das zweite Druckstoßelement 14a, 14b ist im Wesentlichen in Form eines Kolbens mit einem kreisrunden Durchmesser sowie einer zentralen Aussparung 16a, 16b ausgeführt. Alternativ kann der Querschnitt auch jede andere mögliche Form aufweisen. Jedes Druckstoßelement 14a, 14b ist in der jeweiligen ersten oder zweiten Kammer 11a, 11b zwischen einer ersten und zweiten Position bewegbar. Die Kammer 11a, 11b dient hierbei als eine Art Zylinder, sodass das Druckstoßelement 14a, 14b in der jeweiligen Kammer 11a, 11b eine Kolben-Zylinder-Einheit bilden.

Die erste und zweite Kammer 11a, 11b enthält außerdem jeweils eine Führungsstange 17a, 17b, ein erstes Stoppelement 18a, 18b und ein zweites Stoppelement 19a, 19b. Jede Führungsstange 17a, 17b enthält jeweils ein erstes Ende 20a, 20b und ein zweites Ende 21a, 21b. Das erste Stoppelement 18a, 18b ist an dem ersten Ende 20a, 20b der Führungsstange 17a, 17b und das zweite Stoppelement 19a, 19b ist an dem zweiten Ende 21a, 21b der Führungsstange 17a, 17b positioniert. Das als Kolben ausgestaltete Druckstoßelement 14a, 14b ist mit der zentralen Aussparung 16a, 16b um die Führungsstange 17a, 17b positioniert, bzw. die Führungsstange 17a, 17b erstreckt sich durch die zentrale Aussparung 16a, 16b. Das Druckstoßelement 14a, 14b kann sich somit zwischen dem ersten Ende 20a, 20b der Führungsstange 17a, 17b mit dem ersten Stoppelement 18a, 18b und dem zweiten Ende 21a, 21b der Führungsstange 17a, 17b mit dem zweiten Stoppelement 19a, 19b bewegen. Die Stoppelemente 18a, 18b, 19a, 19b bestehen aus Gummi (oder einem anderen elastischen bzw. kompressiblen Material) und dämpfen die Bewegung des Druckstoßelements 14a, 14b, wenn es sich entweder an dem ersten oder zweiten Ende 20a, 20b, 21a, 21b der Führungsstange 17a, 17b befindet. Wenn das Druckstoßelement 14a, 14b an dem ersten Ende 20a, 20b der Führungsstange 17a, 17b anliegt, befindet sich das Druckstoßelement 14a, 14b in der ersten Position. Dementsprechend befindet sich das Druckstoßelement 14a, 14b in der zweiten Position, wenn das Druckstoßelement 14a, 14b an dem zweiten Ende 21a, 21b der Führungsstange 17a, 17b anliegt.

Die erste Einströmöffnung 15a befindet sich in Richtung A an der ersten Kammer 11a und dient zum wiederlösbaren Aufnehmen eines ersten Filterelements 22a. Durch das erste Filterelement 22a und die erste Einströmöffnung 15a strömt der erste Hauptluftstrom 8a von dem Auffangbehälter 4 in die erste Kammer 11a. Das erste Filterelement 22a dient dabei zum Herausfiltern der angesaugten Schmutzpartikel SP aus dem ersten Hauptluftstrom 8a. Die Schmutzpartikel SP verbleiben in den einzelnen Fasern des ersten Filterelements 22a. Durch die erste Ausströmöffnung 12a strömt der erste Hauptluftstrom 8a wieder aus der ersten Kammer 11a hinaus und zur Turbineneinrichtung 6.

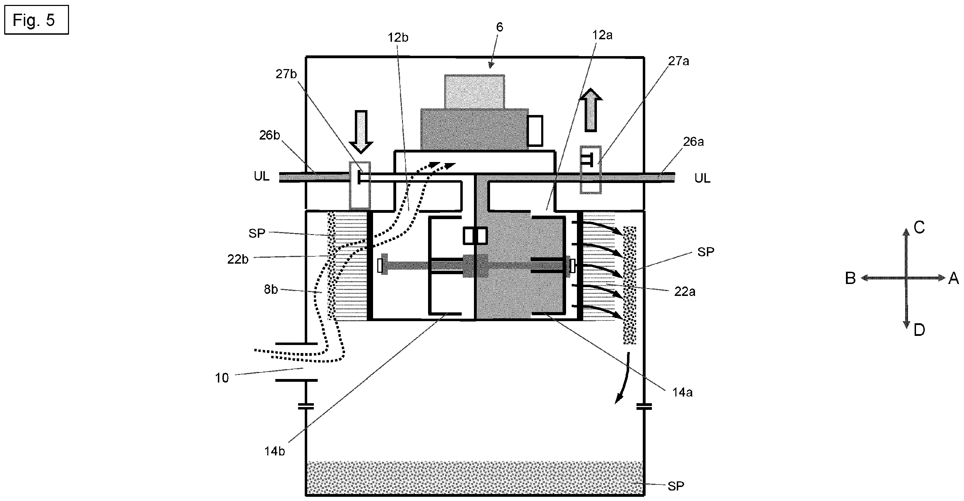

Es ist zu beachten, dass die erste Ausströmöffnung 12a durch das erst Druckstoßelement 14a verschlossen sind, wenn sich das erste Druckstoßelement 14a in der zweiten Position befindet (vgl. Fig. 5, 9, 12).

Wie bereits vorstehend erwähnt, ist das erste Druckstoßelement 14a im Inneren der ersten Kammer 11a positioniert und kann zwischen einer ersten und zweiten Position reversibel bewegt werden. Das erste Druckstoßelement 14a teilt damit die erste Kammer 11a in einen ersten Raum 23a und einen zweiten Raum 24a. Durch die Verschiebung des ersten Druckstoßelements 14a in der ersten Kammer 11a ist das Volumen des ersten und zweiten Raums 23a, 24a veränderbar. Durch den ersten Raum 23a der ersten Kammer 11a strömt hauptsächlich der erste Hauptluftstrom 8a.

Die erste Zuströmöffnung 25a befindet sich an dem zweiten Raum 24a der ersten Kammer 11a. An der ersten Zuströmöffnung 25a ist eine erste Zuströmleitung 26a mit einem ersten Ventil 27a angeschlossen. Über die erste Zuströmleitung 26a kann Luft aus der Umgebung UL des Staubsaugers mit einem atmosphärischen Druck in den zweiten Raum 24a der ersten Kammer 11a gelangen. Die Steuerungseinheit 7 ist so mit dem ersten Ventil 27a verbunden, dass die Steuerungseinheit 7 die Funktion des ersten Ventils 27a steuern und regeln kann. Dabei kann die Steuerungseinheit 7 insbesondere das Öffnen und Schließen des ersten Ventils 27a kontrollieren, um den Zustrom der Umgebungsluft UL mit atmosphärischem Druck in den zweiten Raum zu regeln. Die Verbindung zwischen der Steuerungseinheit 7 und dem ersten Ventil 27a ist in den Figuren nicht dargestellt.

Die zweite Einströmöffnung 15b befindet sich in Richtung B an der zweiten Kammer 11b und dient zum wiederlösbaren Aufnehmen des zweiten Filterelements 22b. Durch das zweite Filterelement 22b und die zweite Einströmöffnung 15b strömt der zweite Hauptluftstrom 8b von dem Auffangbehälter 4 in die zweite Kammer 11b. Das zweite Filterelement 22b dient dabei zum Herausfiltern der angesaugten Schmutzpartikel SP aus dem zweiten Hauptluftstrom 8b. Die Schmutzpartikel SP verbleiben in den einzelnen Fasern des zweiten Filterelements 22b. Durch die zweite Ausströmöffnung 12b strömt der zweite Hauptluftstrom 8bwieder aus der zweiten Kammer 11b hinaus und zur Turbineneinrichtung 6.

Wie ebenfalls bereits vorstehend erwähnt, ist das zweite Druckstoßelement 14b im Inneren der zweiten Kammer 11b positioniert und kann zwischen einer ersten und zweiten Position reversibel bewegt werden. Das zweite Druckstoßelement 14b teilt dabei die zweite Kammer 11b in einen ersten Raum 23b und einen zweiten Raum 24b. Durch die Verschiebung des zweiten Druckstoßelements 14b in der zweiten Kammer 11b ist das Volumen des ersten und zweiten Raums 23b, 24b veränderbar. Durch den ersten Raum 23b der zweiten Kammer 11b strömt hauptsächlich der zweite Hauptluftstrom 8b. Die zweite Zuströmöffnung 25b befindet sich an dem zweiten Raum 24b der zweiten Kammer 11b. An der zweiten Zuströmöffnung 25b ist eine zweite Zuströmleitung 26b mit einem zweiten Ventil 27b angeschlossen. Über die zweite Zuströmleitung 26b kann Luft aus der Umgebung UL des Staubsaugers 1 mit einem atmosphärischen Druck in den zweiten Raum 24b der zweiten Kammer 11b gelangen. Die Steuerungseinheit 7 ist so mit dem zweiten Ventil 27b verbunden, dass die Steuerungseinheit 7 die Funktion des zweiten Ventils 27b steuern und regeln kann. Dabei kann die Steuerungseinheit 7 insbesondere das Öffnen und Schließen des zweiten Ventils 27b kontrollieren, um den Zustrom der Umgebungsluft UL mit atmosphärischem Druck in den zweiten Raum 24b zu regeln. Die Verbindung zwischen der Steuerungseinheit 7 und dem zweiten Ventil 27b ist in den Figuren nicht dargestellt.

Darüber hinaus enthält der erste Raum 23a, 23b der ersten und zweiten Kammer 11a, 11b jeweils einen ersten Luftdrucksensor 28a, 28b, welcher den Luftdruck in dem ersten Raum 23a, 23b misst und mit der Steuerungseinheit 7 verbunden ist. Über die Verbindung kann der erste Luftdrucksensor 28a, 28b den Luftdruckwert in dem ersten Raum 23a, 23b an die Steuerungseinheit 7 senden. Der erste Luftdrucksensor 28a, 28b ist in dem ersten Raum 23a. 23b und insbesondere jeweils an dem zweiten Ende 21a, 21b der Führungsstange 17a, 17b positioniert. Die Steuerungseinheit 7 enthält eine Recheneinheit sowie unterlegte Daten in einem Speicher (Look-Up-Table), mit deren Hilfe die von den ersten Luftdrucksensoren 28a, 28b gesendeten Luftdruckwerte in dem ersten Raum 23a, 23b verarbeitet werden können.

Wie nachfolgend im Detail beschrieben, dienen die Wert des ersten Luftdrucksensors 23a, 23b zur Feststellung, ob bzw. zu welchen Grad das erste und/oder zweite Filterelement 22a, 22b mit angesaugten Schmutzpartikeln SP gefüllt ist. Je geringer der Luftdruckwert, welcher von dem ersten Luftdrucksensor 28a, 28b gemessen wird, desto weniger Luft kann in die Kammern 11a, 11b eindringen und desto voller ist das Filterelement 22a, 22b mit Schmutzpartikeln SP.

Des Weiteren enthält der zweite Raum 24a, 24b der ersten und zweiten Kammer 11a, 11b jeweils einen zweiten Luftdrucksensor 30a, 30b, welcher den Luftdruck in dem zweiten Raum 24a, 24b misst und mit der Steuerungseinheit 7 verbunden ist. Über die Verbindung kann der zweite Luftdrucksensor 30a, 30b den Luftdruckwert in dem zweiten Raum 24a, 24b an die Steuerungseinheit 7 senden. Der zweite Luftdrucksensor 30a, 30b ist in dem jeweiligen zweiten Raum 24a, 24b und an einer Trennwand 31, die zwischen der ersten und zweiten Kammer 11a, 11b verläuft, positioniert. Die Recheneinheit und der Speicher der Steuerungseinheit 7 enthalten ebenfalls unterlegte Daten (Look-Up-Table), mit deren Hilfe auch die von den zweiten Luftdrucksensoren 30a, 30b gesendeten Luftdruckwerte in dem zweiten Raum 24a, 24b verarbeitet werden können.

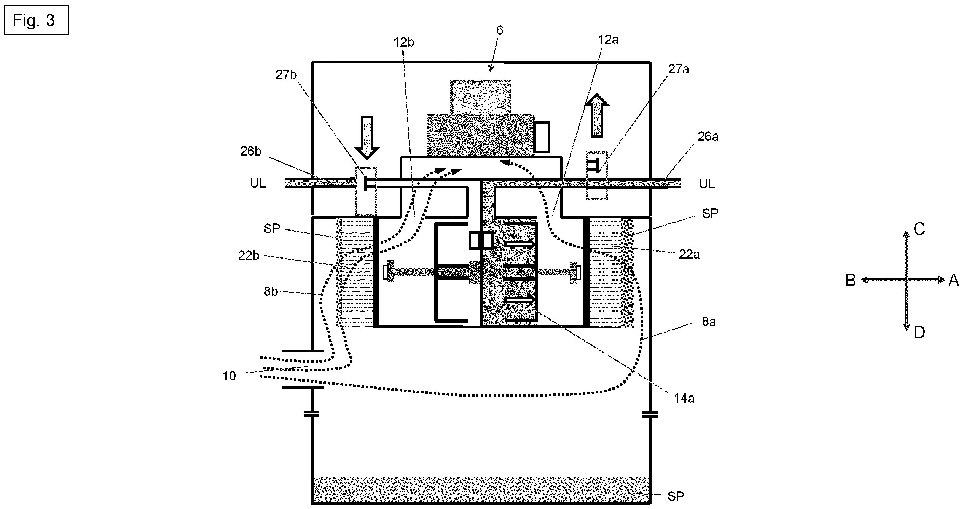

Wenn der Staubsauger 1 in einem normalen Saugzustand, bei dem mit Hilfe der beiden Hauptluftströme 8a, 8b Luft durch den (nicht gezeigten) Staubsaugerschlauch und die beiden Filterelemente 22a, 22b angesaugt wird, befindet sich das erste Druckstoßelement 14a in der ersten Kammer 11a in der ersten Position (vgl. Fig. 1 und 2). Schmutzpartikel SP, die von den Hauptluftströmen 8a, 8b angesaugt werden, bleiben in den Fasern der Filterelemente 22a, 22b haften (vgl. Fig. 3). Wie in den Figuren 1 und 2 zu erkennen ist, ist das erste und zweite Ventil 27a, 27b an den jeweiligen Zuströmleitungen 26a, 26b geschlossen, wodurch keine Umgebungsluft UL mit einem atmosphärischen Druck in den zweiten Raum 24a, 24b der ersten oder zweiten Kammer 11a, 11b gelangen kann.

Wie in der Figur 3 angedeutet ist, hat sich an dem ersten Filterelement 22a eine gewisse Schicht aus angesaugten Schmutzpartikeln SP gebildet. Die Schmutzpartikelschicht SP an dem ersten Filterelement 22a ist dabei dicker als an dem zweiten Filterelement 22b. Als Folge der relativ dicken Schmutzpartikelschicht SP an dem ersten Filterelement 22a gelangt weniger angesaugte Luft mit dem ersten Hauptluftstrom 8a in den ersten Raum 23a der ersten Kammer 11a. Der erste Luftdrucksensor 28a in dem ersten Raum 23a der ersten Kammer 11a misst den niedrigen Luftdruckwert und sendet diesen an die Steuerungseinheit 7. Die Steuerungseinheit 7 wertet den niedrigen Luftdruckwert aus und öffnet das erste Ventil 28a in der ersten Zuströmleitung 26a. Die Auswertung erfolgt dabei durch einen Abgleich der erfassten Luftdruckwerte mit hinterlegten Werten. Alternativ kann die Auswertung durch einen hinterlegten Logarithmus erfolgen. Durch das Öffnen des ersten Ventils 28a kann Umgebungsluft UL mit einem atmosphärischen Druck, d.h. mit einem Luftdruckwert der höher ist als der aktuelle Luftdruckwert in dem ersten Raum 23a der ersten Kammer 11a, durch die erste Zuströmleitung 26a und durch die erste Zuströmöffnung 25a in den zweiten Raum 24a der ersten Kammer 11a strömen. Der zweite Luftdrucksensor 30a in dem zweiten Raum 24a misst den Luftdruck in dem zweiten Raum 24a, welches durch die einströmende Umgebungsluft UL ansteigt. Dadurch, dass der Wert des zweiten Luftdrucksensors 30a an die Steuerungseinheit 7 gesendet wird, kann die Steuerungseinheit 7 den steigenden Luftdruck in dem zweiten Raum 24a kontrollieren und das Ventil 27a entsprechend einstellen. Wenn beispielsweise der Luftdruck in dem zweiten Raum 24a sehr schnell einen bestimmten und in dem Speicher der Steuerungseinheit 7 hinterlegten Wert übersteigt, schließt die Steuerungseinheit 7 das Ventil 27a entsprechend schnell wieder. Ebenso kann das Ventil 27a auch länger geöffnet bleiben, wenn der Luftdruck in dem zweiten Raum 24a nur langsam ansteigt. Desgleichen kann die Steuerungseinheit 7 auch den Strömungsdurchmesser in dem Ventil 27a regeln, um mehr oder weniger Umgebungsluft UL schneller oder langsamer in den zweiten Raum 24a strömen zu lassen.

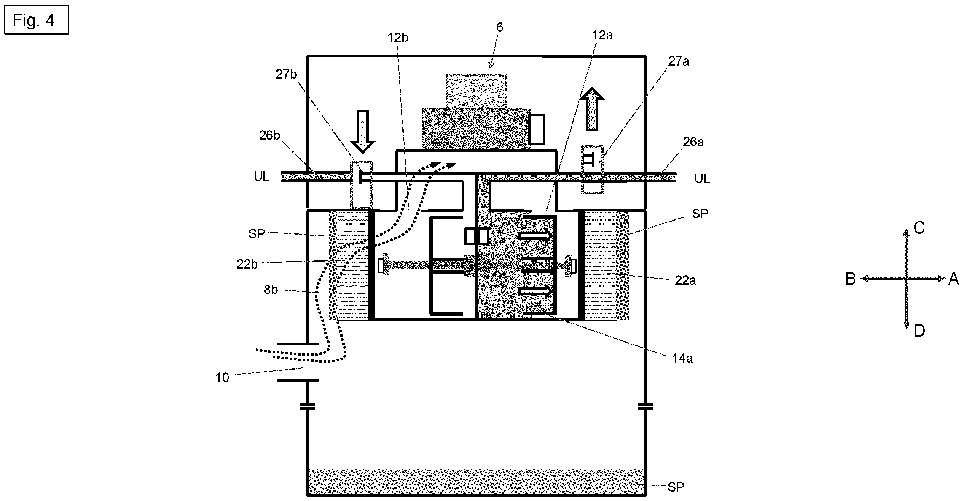

Dadurch, dass nun in dem zweiten Raum 24a ein höherer Druck herrscht als in dem ersten Raum 23a, wird das erste Druckstoßelement 14a von der ersten Position in Richtung A in die zweite Position bewegt (vgl. Fig. 4). Diese Bewegung erfolgt dabei schlagartig, sodass über die gestaute Luft in dem Spalt (d.h. kleiner erster Raum) zwischen dem ersten Druckstoßelement 14a und dem ersten Filterelement 22a ein Impuls von dem ersten Druckstoßelement 14a auf das erste Filterelement 22a übertragen wird. Durch diesen Impuls wird die Schmutzpartikelschicht SP von dem ersten Filterelement 22a abgelöst bzw. abgeschlagen. Die Schmutzpartikelschicht SP fällt in Richtung D in den Auffangbehälter 4 (vgl. Fig. 5). In diesem Zustand verbleibt der Staubsauger 1 weiterhin in einem Staubsaugbetrieb, da weiterhin mit dem zweiten Hauptluftstrom 8b Schmutzpartikel SP durch das zweite Filterelement 22b und die zweite Kammer 11b eingesaugt werden können (vgl. Fig. 4, 5).

Es ist dabei zu beachten, dass das erste Druckstoßelement 14a, 14b nicht vollständig bis zu einem Kontakt an das Filterelement 22a, 22b heranbewegt wird. Wie bereits erwähnt verbleibt ein gewisser Spalt zwischen dem Druckstoßelement 14a, 14b und dem Filterelement 22a, 22b. Wie bereits vorstehend erwähnt, ist die erste Ausströmöffnung 12a durch das als Kolben ausgestaltete Druckstoßelement 14a verschlossen, wenn sich das erste Druckstoßelement 14a in der zweiten Position befindet (Fig. 5).

Nachdem die Schmutzpartikelschicht SP von dem ersten Filterelement 22a in den Auffangbehälter 4 gefallen ist, wird das erste Ventil 27a wieder verschlossen, sodass keine Umgebungsluft UL mit einem atmosphärischen Luftdruck mehr in den zweiten Raum 24a gelangen kann. Dadurch, dass in dem zweiten Raum 24a der ersten Kammer 11a kein Überdruck durch die eingeleitete Umgebungsluft UL mehr besteht und der erste Hauptluftstrom 8a wieder mit einem höheren Luftdruck auf das erste Druckstoßelement 14a drückt, bewegt sich das erste Druckstoßelement 14a von der zweiten Position in Richtung B wieder in die erste Position zurück. Die erste Ausströmöffnung 12a wird nicht mehr durch das erste Druckstoßelement 14a verschlossen und öffnet sich zunehmend, wenn sich das erste Druckstoßelement 14a in Richtung B bewegt. Mit der zunehmenden Öffnung der ersten Ausströmöffnung 12a strömt immer mehr Luft mit dem ersten Hauptluftstrom 8a durch den ersten Raum 23a der ersten Kammer 11a.

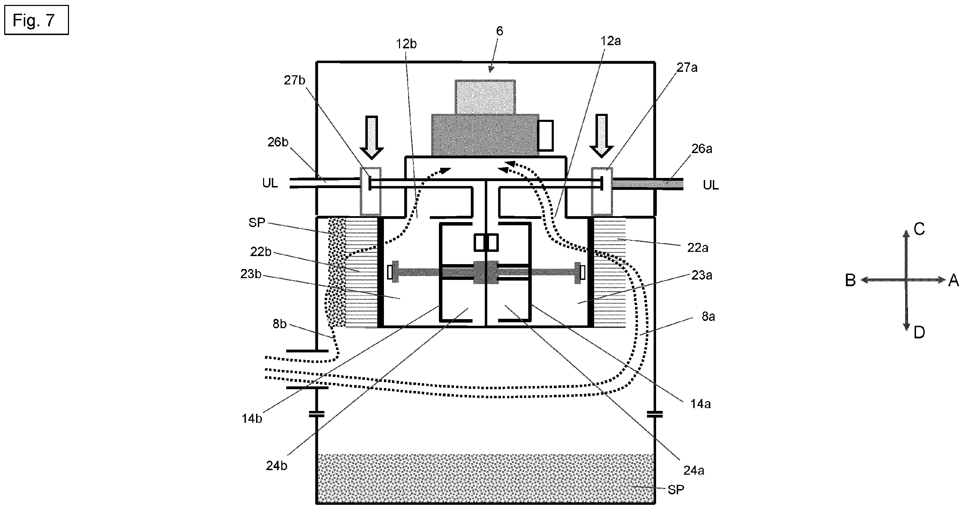

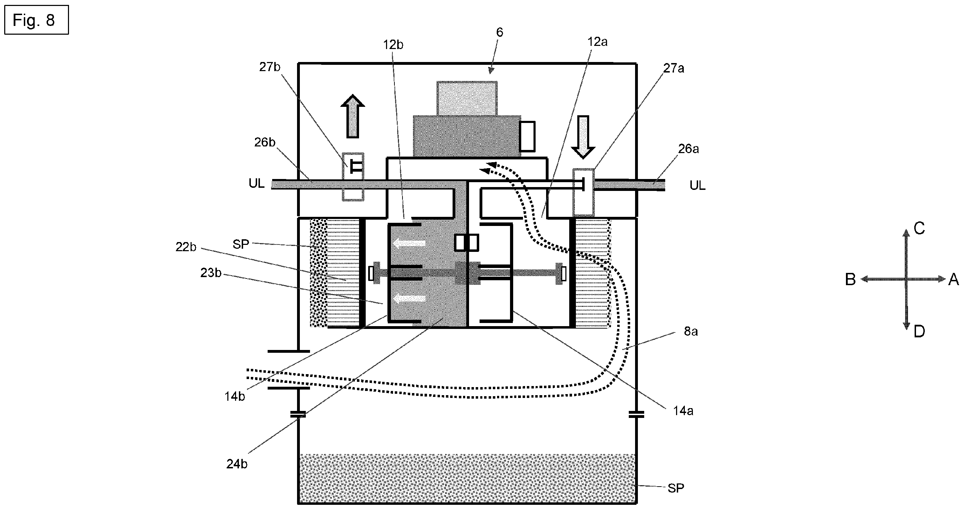

Figur 7 stellt den Zustand dar, in dem das erste Filterelement 22a gereinigt, jedoch an dem zweiten Filterelement 22b eine gewisse Schmutzpartikelschicht SP durch die angesaugten und in dem zweiten Filterelement 22b zurückgehaltenen Schmutzpartikel SP angewachsen ist. Wie ebenfalls in Figur 7 zu erkennen ist, ist der zweite Hauptluftstrom 8b schwächer im Vergleich zu dem ersten Hauptluftstrom 8a. Der zweite Hauptluftstrom 8b ist schwächer, da weniger Luft durch das verstopfte zweite Filterelement 22b in den ersten Raum 23b der zweiten Kammer 11b strömen kann. Der Luftdruckwert wird mittels des ersten Luftdrucksensors 28a in dem ersten Raum 23b der zweiten Kammer 11b gemessen und an die Steuerungseinheit 7 gesendet. Die Steuerungseinheit 7 stellt den niedrigen Luftdruckwert in dem ersten Raum 23b fest und öffnet das zweite Ventil 27b, sodass Umgebungsluft UL mit einem atmosphärischen Druck über die zweite Zuströmleitung 26b und durch die zweite Zuströmöffnung 25b in den zweiten Raum 24b der zweiten Kammer 11b strömen kann. Durch den plötzlichen Überdruck in dem zweiten Raum 24b der zweiten Kammer 11b wird das zweite Druckstoßelement 14b schlagartig von der ersten Position in Richtung B in die zweite Position bewegt (Fig. 8). Wie bereits bei dem ersten Druckstoßelement 14b beschrieben, verschließt das als Kolben ausgestaltete zweite Druckstoßelement 14b zunehmend auf dem Weg von der ersten in die zweite Position die zweite Ausströmöffnung 12b. Hierdurch nimmt der Druckunterschied zwischen dem ersten und zweiten Raum 23b, 24b weiterhin zu.

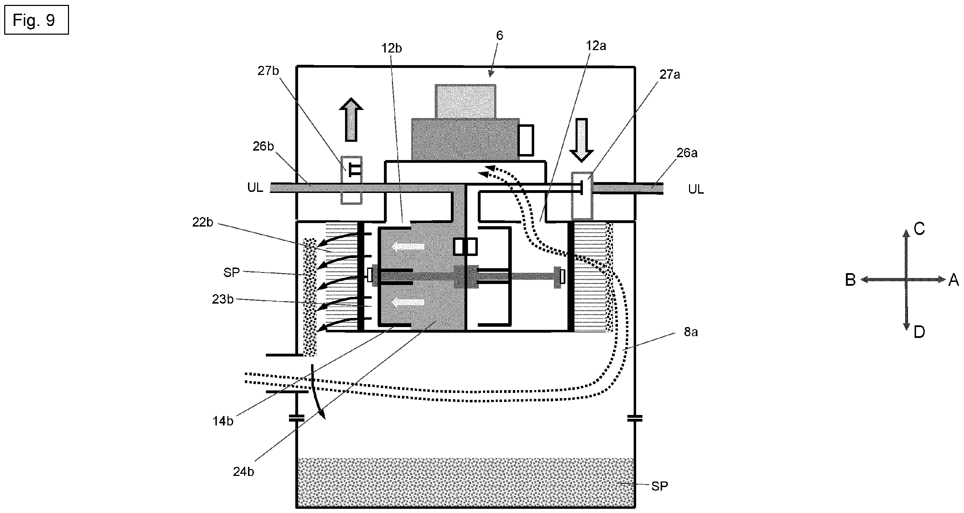

Die schlagartige Bewegung des zweiten Druckstoßelements 14b von der ersten in die zweite Position bewirkt dabei, dass über die gestaute Luft in dem Spalt (d.h. kleiner erster Raum) zwischen dem zweiten Druckstoßelement 14b und dem zweiten Filterelement 22b ein Impuls von dem zweiten Druckstoßelement 14b auf das zweite Filterelement 22b übertragen wird. Durch diesen Impuls wird die Schmutzpartikelschicht SP von dem zweiten Filterelement 22b abgelöst bzw. abgeschlagen. Die Schmutzpartikelschicht SP fällt in Richtung D in den Auffangbehälter 4 (vgl. Fig. 9). In diesem Zustand verbleibt der Staubsauger 1 weiterhin in einem Staubsaugbetrieb, da weiterhin mit dem ersten Hauptluftstrom 8a Schmutzpartikel SP durch das erste Filterelement 22a und die erste Kammer 11a eingesaugt werden können (vgl. Fig. 8, 9).

Anschließend wird über die Steuerungseinheit 7 das zweite Ventil 27b in der zweiten Zuströmleitung 26b geschlossen, sodass kein Überdruck mehr in dem zweiten Raum 24b besteht. Der zweite Hauptluftstrom 8b drückt auf das als Kolben ausgestaltete zweite Druckstoßelement 14b und bewegt dieses wieder von der zweiten Position in Richtung A in die erste Position zurück. Die zweite Ausströmöffnung 12b ist nun nicht mehr verschlossen und der zweite Hauptluftstrom 8b strömt wieder durch das zweite Filterelement 22b und durch die zweite Kammer 11b.

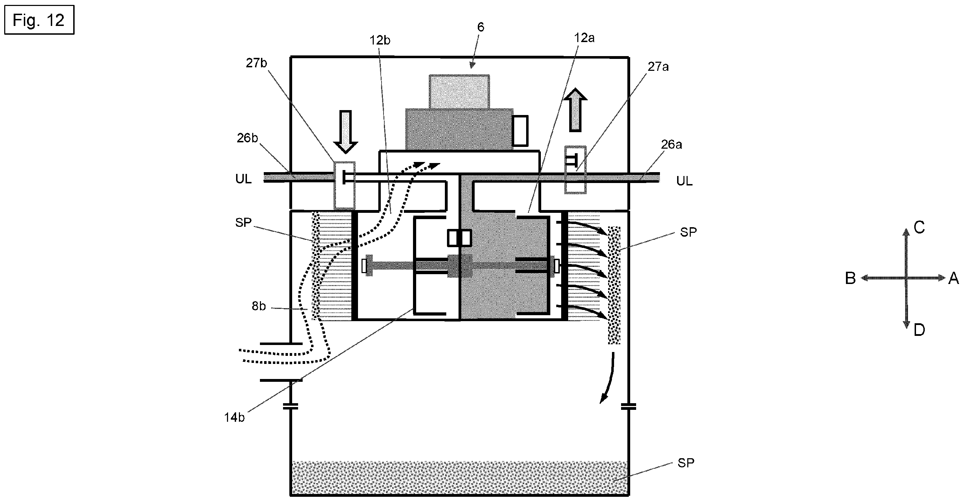

Wie in Figur 12 gezeigt, wiederholt sich der Vorgang der Abreinigung des ersten Filterelements 22a, wenn dieser nach einer gewissen Zeit wieder mit einer Schmutzpartikelschicht SP bedeckt, d.h. das Filterelement 22a durch Schmutzpartikel SP verstopft ist.

Die Abreinigung der Filterelemente 22a, 22b kann dabei auf Grundlage der Luftdruckwerte erfolgen, die von den ersten Luftdrucksensoren 28a, 28b gemessen und an die Steuerungseinheit 7 gesendet werden. Wie vorstehend beschrieben, kann eine Abreinigung eines Filterelements 22a, 22b erfolgen, wenn der gemessene Luftdruckwert in dem ersten Raum 23a, 23b einen bestimmten Wert übersteigt. Es ist jedoch auch möglich, dass die Abreinigung der Filterelemente 22a, 22b regelmäßig oder in bestimmten Intervallen von der Steuerungseinheit 7 gesteuert wird. Alternativ kann die Abreinigung der Filterelemente 22a, 22b auch mittels eines nicht in den Figuren gezeigten Mechanismus durch einen Anwender des Staubsaugers 1 erfolgen. Es ist dabei möglich, dass der Mechanismus abwechselnd das erste oder zweite Ventil 27a, 27b verschlie-ßen und wieder öffnen kann, sodass auch abwechseln das erste und zweite Filterelement 22a, 22b gereinigt wird.

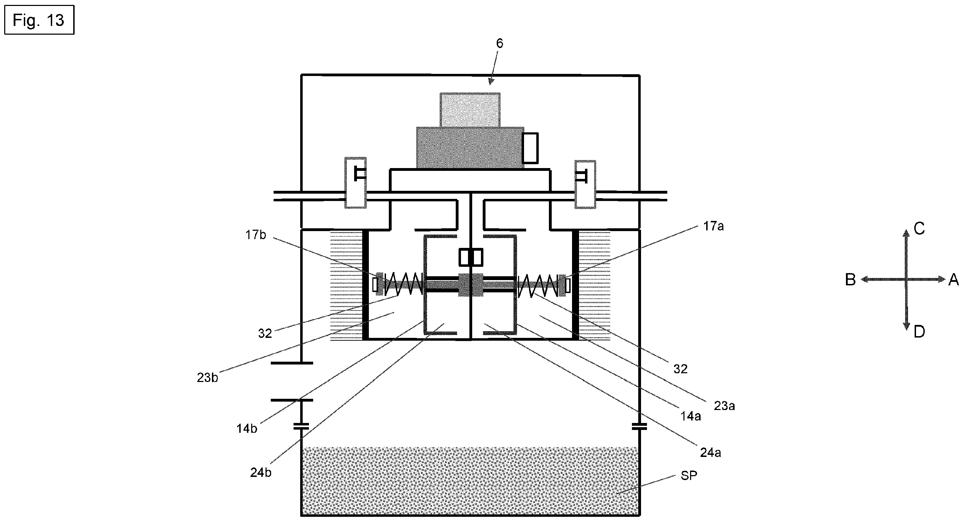

Figur 13 zeigt eine Filtereinrichtung 2 gemäß einer zweiten Ausführungsform. Die Filtereinrichtung 2 gemäß der zweiten Ausführungsform entspricht dabei im Wesentlichen der Filtereinrichtung 2 gemäß der ersten Ausführungsform. Im Unterschied zu der ersten Ausführungsform enthält die Filtereinrichtung 2 gemäß der zweiten Ausführungsform ein erstes Rückhalteelement 32 in Form einer Druckfeder. Die Druckfeder ist jeweils in dem ersten Raum 23a, 23b und um die Führungsstange 17a, 17b positioniert. Die Druckfeder weist ein erstes und ein zweites Ende auf, wobei das erste Ende an dem ersten Ende 20a, 20b der Führungsstange 17a, 17b und das zweite an dem als Kolben ausgestalteten Druckstoßelement 14a, 14b anliegt. Das als Druckfeder ausgestaltete Rückhaltelement 32 dient dazu das Druckstoßelement 14a, 14b solange in der ersten Position zu halten bis ein gewisser Luftdruckwert in dem ersten Raum 23a, 23b durch die einströmende Umgebungsluft UL erreicht ist. Wenn der Luftdruck die Federkraft des als Druckfeder ausgestalteten Rückhalteelements 32 schließlich übersteigt, bewegt sich das Druckstoßelement 14a, 14b besonders schlagartig von der ersten in die zweite Position. Hierdurch kann eine verbesserte Abreinigung des Filterelements 22a, 22b erreicht werden.

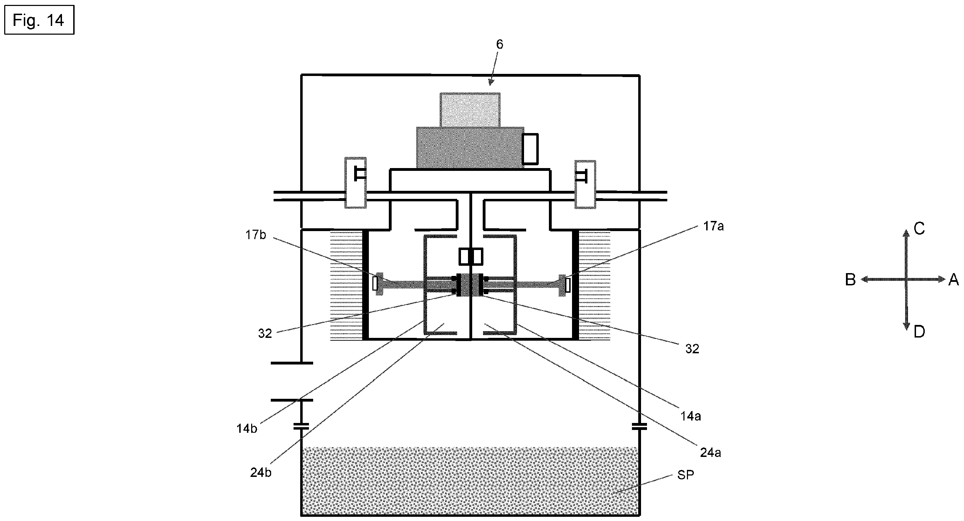

Figur 14 zeigt eine Filtereinrichtung 2 gemäß einer dritten Ausführungsform. Die Filtereinrichtung 22a, 22b gemäß der zweiten Ausführungsform entspricht dabei im Wesentlichen der Filtereinrichtung 2 gemäß der ersten Ausführungsform. Im Unterschied zu der ersten Ausführungsform enthält die Filtereinrichtung 2 gemäß der zweiten Ausführungsform ein zweites Rückhalteelement 33 in Form eines Magneten. Der Magnet ist dabei in dem zweiten Raum 24a, 24b und an dem zweiten Ende 21a, 21b der Führungsstange 17a, 17b positioniert. Der Magnet wirkt so auf das als Kolben ausgestaltete Druckstoßelement 14a, 14b, dass dieses in der ersten Position solange gehalten wird bis der durch die einströmende Umgebungsluft UL ansteigende Luftdruck in dem zweiten Raum 24a, 24b einen gewissen Wert übersteigt. Wenn der Luftdruck in dem zweiten Raum 24a, 24b die Magnetkraft des Magneten schließlich übersteigt, bewegt sich das Druckstoßelement 14a, 14b besonders schlagartig von der ersten in die zweite Position. Hierdurch kann eine verbesserte Abreinigung des Filterelements 22a, 22b erreicht werden.

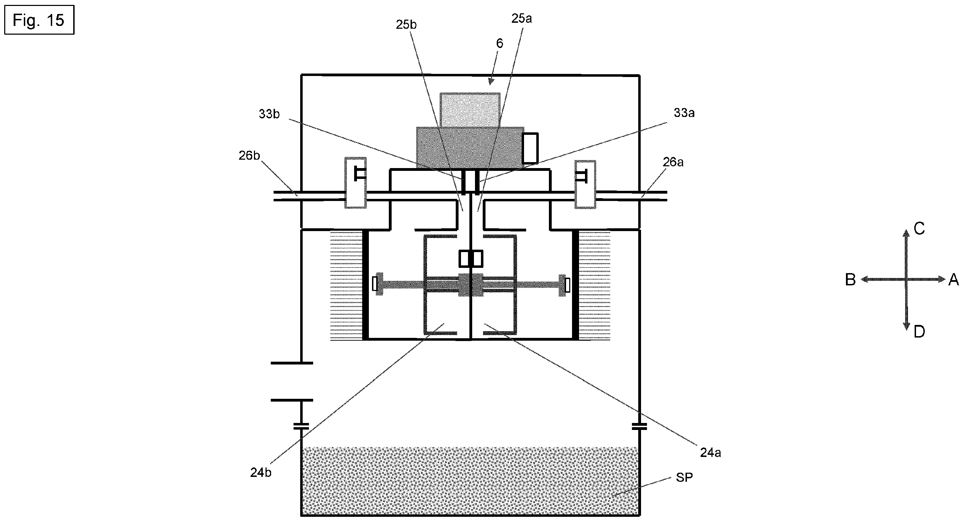

Figur 15 zeigt eine Filtereinrichtung 2 gemäß einer vierten Ausführungsform. Die Filtereinrichtung 2 gemäß der vierten Ausführungsform entspricht dabei im Wesentlichen der Filtereinrichtung 2 gemäß der ersten Ausführungsform. Im Unterschied zu der ersten Ausführungsform enthält die Filtereinrichtung 2 gemäß der vierten Ausführungsform einen ersten und zweiten Verbindungskanal 33a, 33b. Der erste Verbindungskanal 33a verbindet die Turbineneinrichtung 6 und die erste Zuströmleitung 26a, um den Luftdruck mit Hilfe der Turbineneinrichtung 6 in dem zweiten Raum 24a der ersten Kammer 11a zu erhöhen. Der zweite Verbindungskanal 33b verbindet die Turbineneinrichtung 6 und die zweite Zuströmleitung 26b, um den Luftdruck mit Hilfe der Turbineneinrichtung 6 in dem zweiten Raum 14b der zweiten Kammer 11b zu erhöhen. Dadurch, dass zusätzlich mittels eines durch die Turbineneinrichtung 6 erzeugten Unterdrucks Luft über den ersten oder zweiten Verbindungskanal 33a, 33b aus dem zweiten Raum 24a, 24b der jeweils ersten oder zweiten Kammer 11a, 11b strömen kann, ist es möglich, das Druckstoßelement 14a, 14b von der zweiten in die erste Position zu bewegen. Hierdurch kann das Druckstoßelement 14a, 14b schneller von der zweiten in die erste Position bewegt werden.

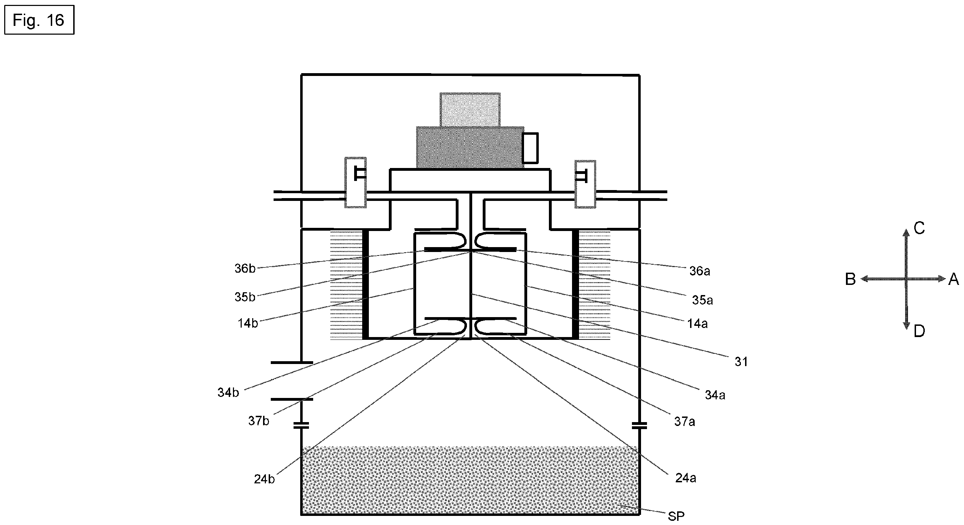

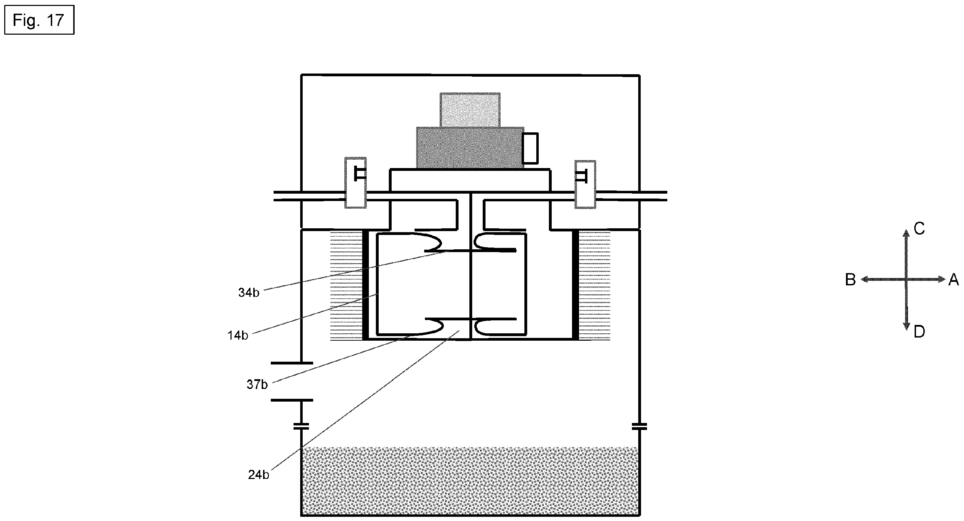

Figur 16 und 17 zeigen eine Filtereinrichtung 2 gemäß einer fünften Ausführungsform. Im Unterschied zu der Filtereinrichtung 2 gemäß den anderen Ausführungsformen, d.h. erste bis vierte Ausführungsform, ist in der Filtereinrichtung 2 gemäß der fünften Ausführungsform das erste und zweite Druckstoßelement 14a, 14b nicht jeweils mit einer Führungsstange 17a, 17b ausgestattet. Wie den Figuren 16 und 17 zu entnehmen ist, ist das erste und zweite Druckstoßelement 14a, 14b jeweils in Form eines kreisrunden Kolbens ausgebildet. In dem zweiten Raum 24a der ersten Kammer 11a ist ein erstes Zylinderelement 34a enthalten. In dem zweiten Raum 24b der zweiten Kammer 11b ist ein zweites Zylinderelement 34b enthalten. Jeder Zylinderelement 34a, 34b enthält jeweils ein erstes Ende 35a, 35b sowie ein zweites Ende 36a, 36b auf. Das erste Ende 35a, 35b der Zylinderelemente 34a, 34b ist an der Trennwand 31 befestigt. An dem zweiten Ende 36a des ersten Zylinderelements 34a ist ein erstes Membranelement 37a positioniert. Das erste Membranelement 37a umschließt dabei vollständig das zweite Ende 36a des ersten Zylinderelements 34a und verbindet das zweite Ende 36a des ersten Zylinderelements 34a mit dem äußeren Rand des als kreisrunden Kolben bzw. als Scheibe ausgestalteten Druckstoßelements 14a, 14b. An dem zweiten Ende 36b des zweiten Zylinderelements 34b ist ein zweites Membranelement 37b positioniert. Das zweite Membranelement 37b umschließt dabei vollständig das zweite Ende 36b des zweiten Zylinderelements 34b und verbindet das zweite Ende 36b des zweiten Zylinderelements 34b mit dem äußeren Rand des als kreisrunden Kolben bzw. als Scheibe ausgestalteten Druckstoßelements. Das erste und zweite Membranelement 37a, 37b ist dabei jeweils als Rollmembran ausgestaltet, sodass es sich mit dem ersten bzw. zweiten Druckstoßelement 14a, 14b elastisch erstreckt, wenn das erste bzw. zweite Druckstoßelement 14a, 14b von der ersten in eine zweite Position (vgl. Fig. 17) bewegt. Mit anderen Worten: das jeweils als Rollmembran ausgestaltete erste und zweite Membranelement 37a, 37b rollt sich aus, wenn sich das jeweilige Druckstoßelement 14a, 14b von der ersten in die zweite Position bewegt. Wenn sich das Druckstoßelement 14a, 14b wieder von der zweiten in die erste Position bewegt, rollt sich das jeweils als Rollmembran ausgestaltete erste und zweite Membranelement 37a, 37b wieder zusammen.

Gemäß einer weiteren nicht in den Figuren gezeigten Ausführungsform ist es außerdem möglich, dass die zweite, dritte und vierte Ausführungsform auch miteinander kombiniert werden.

## Patentansprüche

1. Filtereinrichtung (2) für einen Staubsauger (1), mit einer Turbineneinrichtung (6) zum Erzeugen wenigstens eines ersten und zweiten Hauptluftstroms (8a, 8b) durch mindestens einen Teilbereich des Staubsaugers (1) sowie einer Steuerungseinheit (7),
**gekennzeichnet durch**
- eine erste Kammer (11a) mit einem ersten Filterelement (22a), einer ersten Ausströmöffnung (12a), einer ersten Zuströmöffnung (25a) und ein erstes Druckstoßelement (14a), welches die erste Kammer (11a) in einen ersten und zweiten Raum (23a, 24a) unterteilt und reversibel zwischen einer ersten und zweiten Position bewegbar ist und
- eine zweite Kammer (11b) mit einem zweiten Filterelement (22b), einer zweiten Ausströmöffnung (12b), einer zweiten Zuströmöffnung (25b) und ein zweites Druckstoßelement (14b), welches die zweite Kammer (11b) in einen ersten und zweiten Raum (23b, 24b) unterteilt und reversibel zwischen einer ersten und zweiten Position bewegbar ist.

2. Filtereinrichtung (2) nach Anspruch 1,
**dadurch gekennzeichnet, dass** das abwechselnde reversible Bewegen des ersten und das zweite Druckstoßelements von der ersten in die zweite Position durch die Steuerungseinheit geregelt ist.

3. Filtereinrichtung (2) nach Anspruch 1 oder 2,
**dadurch gekennzeichnet, dass** eine erste Zuströmleitung mit einem ersten Ventil und eine zweite Zuströmleitung mit einem zweiten Ventil enthalten sind, wobei die erste Zuströmöffnung durch die erste Zuströmleitung und die zweite Zuströmöffnung durch die zweite Zuströmleitung mit der Umgebungsluft verbindbar ist und wobei durch das erste Ventil die erste Zuströmleitung und das zweite Ventil die zweite Zuströmleitung verschließbar ist.

4. Filtereinrichtung (2) nach wenigstens einem der Ansprüche 1 bis 3,
**dadurch gekennzeichnet, dass** ein erstes und zweites Rückhalteelement enthalten ist, wobei durch das erste Rückhalteelement das erste Druckstoßelement in der ersten Position und das zweite Rückhalteelement das zweite Druckstoßelement in der ersten Position gehalten werden kann.

5. Filtereinrichtung (2) nach Anspruch 4,
**dadurch gekennzeichnet, dass** das erste und/oder zweite Rückhalteelement in Form einer Feder ausgestaltet ist.

6. Filtereinrichtung (2) nach Anspruch 4,
**dadurch gekennzeichnet, dass** das erste und/oder zweite Rückhalteelement in Form eines Magneten ausgestaltet ist.

7. Filtereinrichtung (2) nach Anspruch 1,
**dadurch gekennzeichnet, dass** ein erster und zweiter Verbindungskanal enthalten ist, wobei der erste Verbindungskanal die Turbineneinrichtung und die erste Zuströmleitung verbindet, um den Luftdruck mit Hilfe der Turbineneinrichtung in dem zweiten Raum der ersten Kammer zu erhöhen und wobei der zweite Verbindungskanal die Turbineneinrichtung und die zweite Zuströmleitung verbindet, um den Luftdruck mit Hilfe der Turbineneinrichtung in dem zweiten Raum der zweiten Kammer zu erhöhen.

8. Filtereinrichtung (2) nach Anspruch 1,
**dadurch gekennzeichnet, dass** der erste Hauptluftstrom (8a) durch das erste Filterelement (22a) in den ersten Raum (23a) der ersten Kammer (11a) einströmbar und aus der ersten Ausströmöffnung (12a) wieder ausströmbar ist.

9. Filtereinrichtung (2) nach Anspruch 1,
**dadurch gekennzeichnet, dass** der zweite Hauptluftstrom (8b) durch das zweite Filterelement (22b) in den ersten Raum (23b) der zweiten Kammer (11b) einströmbar und aus der zweiten Ausströmöffnung (12b) wieder ausströmbar ist.

10. Filtereinrichtung (2) nach Anspruch 1,
**dadurch gekennzeichnet, dass** die erste Ausströmöffnung (12a) und das erste Filterelement (22a) so an dem ersten Raum (23a) der ersten Kammer (11a) positioniert ist, dass ein von dem ersten Hauptluftstrom (8a) erzeugbarer Unterdruck das erste Druckstoßelement (14a) in die erste Position bewegt, und die zweite Ausströmöffnung (12b) und das zweite Filterelement (22b) so an dem ersten Raum (23b) der zweiten Kammer (11b) positioniert ist, dass ein von dem zweiten Hauptluftstrom (8b) erzeugbarer Unterdruck das zweite Druckstoßelement (14b) in die erste Position bewegt.

11. Filtereinrichtung (2) nach Anspruch 1,
**dadurch gekennzeichnet, dass** die erste Zuströmöffnung (25a) so an dem zweiten Raum (24a) der ersten Kamme (11a) positioniert ist, dass ein durch die Zuströmöffnung (25a) auf den zweiten Raum (24a) der ersten Kamme (11a) wirkender atmosphärischer Druck das erste Druckstoßelement (14a) in die zweite Position bewegt, wodurch ein Impuls von dem ersten Druckstoßelement (14a) auf das erste Filterelement (22a) übertragen wird zur schlagartigen Abreinigung des ersten Filterelements (22a), und die zweite Zuströmöffnung (25b) so an dem zweiten Raum (24b) der zweiten Kammer (11b) positioniert ist, dass ein durch die zweite Zuströmöffnung (25b) auf den zweiten Raum (24b) der zweiten Kammer (11b) wirkender atmosphärischer Druck das zweite Druckstoßelement (14b) in die zweite Position bewegt, wodurch ein Impuls von dem zweiten Druckstoßelement (14b) auf das zweite Filterelement (22b) übertragen wird zur schlagartigen Abreinigung des zweiten Filterelements (22b).

12. Filtereinrichtung (2) nach Anspruch 1,
**dadurch gekennzeichnet, dass** abwechselnd das erste Druckstoßelement (14a) und das zweite Druckstoßelement (14b) reversibel von der ersten in die zweite Position zur abwechselnden Abreinigung des ersten und zweiten Filterelements (22a, 22b) bewegbar ist.

## Claims

1. Filter device (2) for a vacuum cleaner (1) having a turbine device (6) for generating at least one first and one second main air stream (8a, 8b) through at least one sub-region of the vacuum cleaner (1), and having a control unit (7),
**characterized by**
- a first chamber (11a) with a first filter element (22a), a first outflow opening (12a), a first incoming-flow opening (25a) and a first pressure surge element (14a) which subdivides the first chamber (11a) into a first and a second space (23a, 24a) and which is reversibly movable between a first and a second position, and
- a second chamber (11b) with a second filter element (22b), a second outflow opening (12b), a second incoming-flow opening (25b) and a second pressure surge element (14b) which subdivides the second chamber (11b) into a first and a second space (23b, 24b) and which is reversibly movable between a first and a second position.

2. Filter device (2) according to Claim 1,
**characterized in that** the alternating reversible movement of the first and second pressure surge elements from the first position into the second position is regulated by the control unit.

3. Filter device (2) according to Claim 1 or 2,
**characterized in that** a first incoming-flow line with a first valve and a second incoming-flow line with a second valve are comprised, wherein the first incoming-flow opening is connectable to the ambient air by way of the first incoming-flow line and the second incoming-flow opening is connectable to the ambient air by way of the second incoming-flow line, and wherein the first incoming-flow line is able to be closed off by the first valve and the second incoming-flow line is able to be closed off by the second valve.

4. Filter device (2) according to at least one of Claims 1 to 3,
**characterized in that** a first and a second retaining element are comprised, wherein the first pressure surge element can be held in the first position by the first retaining element and the second pressure surge element can be held in the first position by the second retaining element.

5. Filter device (2) according to Claim 4,
**characterized in that** the first retaining element and/or second retaining element are/is in the form of a spring.

6. Filter device (2) according to Claim 4,
**characterized in that** the first retaining element and/or second retaining element are/is in the form of a magnet.

7. Filter device (2) according to Claim 1,
**characterized in that** a first and a second connecting channel are comprised, wherein the first connecting channel connects the turbine device and the first incoming-flow line in order to increase the air pressure, by means of the turbine device, in the second space of the first chamber, and wherein the second connecting channel connects the turbine device and the second incoming-flow line in order to increase the air pressure, by means of the turbine device, in the second space of the second chamber.

8. Filter device (2) according to Claim 1,
**characterized in that** the first main air stream (8a) is able to be caused to flow into the first space (23a) of the first chamber (11a) through the first filter element (22a) and is able to be caused to flow out again from the first outflow opening (12a).

9. Filter device (2) according to Claim 1,
**characterized in that** the second main air stream (8b) is able to be caused to flow into the first space (23b) of the second chamber (11b) through the second filter element (22b) and is able to be caused to flow out again from the second outflow opening (12b).

10. Filter device (2) according to Claim 1,
**characterized in that** the first outflow opening (12a) and the first filter element (22a) are positioned at the first space (23a) of the first chamber (11a) in such a way that a negative pressure able to be generated by the first main air stream (8a) moves the first pressure surge element (14a) into the first position, and the second outflow opening (12b) and the second filter element (22b) are positioned at the first space (23b) of the second chamber (11b) in such a way that a negative pressure able to be generated by the second main air stream (8b) moves the second pressure surge element (14b) into the first position.

11. Filter device (2) according to Claim 1,
**characterized in that** the first incoming-flow opening (25a) is positioned at the second space (24a) of the first chamber (11a) in such a way that an atmospheric pressure acting on the second space (24a) of the first chamber (11a) by way of the incoming-flow opening (25a) moves the first pressure surge element (14a) into the second position, whereby an impulse is transmitted from the first pressure surge element (14a) to the first filter element (22a) for abrupt cleaning of the first filter element (22a), and the second incoming-flow opening (25b) is positioned at the second space (24b) of the second chamber (11b) in such a way that an atmospheric pressure acting on the second space (24b) of the second chamber (11b) by way of the second incoming-flow opening (25b) moves the second pressure surge element (14b) into the second position, whereby an impulse is transmitted from the second pressure surge element (14b) to the second filter element (22b) for abrupt cleaning of the second filter element (22b).

12. Filter device (2) according to Claim 1,
**characterized in that** the first pressure surge element (14a) and the second pressure surge element (14b), in an alternating manner, are reversibly movable from the first position into the second position for alternating cleaning of the first and second filter elements (22a, 22b).

## Revendications

1. Dispositif à filtre (2) pour un aspirateur (1), comprenant un dispositif à turbine (6) destiné à générer au moins un premier et un deuxième courant d'air principal (8a, 8b) à travers au moins une zone partielle de l'aspirateur (1), ainsi qu'une unité de commande (7)
**caractérisé par**
- une première chambre (11a) comprenant un premier élément filtrant (22a), une première ouverture de sortie de flux (12a), une première ouverture d'arrivée de flux (25a) et un premier élément de choc de pression (14a), lequel subdivise la première chambre (11a) en un premier et un deuxième espace (23a, 24a) et peut être déplacé de manière réversible entre une première et une deuxième position et
- une deuxième chambre (11b) comprenant un deuxième élément filtrant (22b), une deuxième ouverture de sortie de flux (12b), une deuxième ouverture d'arrivée de flux (25b) et un deuxième élément de choc de pression (14b), lequel subdivise la deuxième chambre (11b) en un premier et un deuxième espace (23b, 24b) et peut être déplacé de manière réversible entre une première et une deuxième position.

2. Dispositif à filtre (2) selon la revendication 1,
**caractérisé en ce que** le mouvement réversible en alternance du premier et du deuxième élément de choc de pression de la première à la deuxième position est régulé par l'unité de commande.

3. Dispositif à filtre (2) selon la revendication 1 ou 2,
**caractérisé en ce qu'**une première conduite d'arrivée de flux pourvue d'une première soupape et une deuxième conduite d'arrivée de flux pourvue d'une deuxième soupape sont incluses, la première ouverture d'arrivée de flux pouvant être reliée à l'air ambiant par la première conduite d'arrivée de flux et la deuxième ouverture d'arrivée de flux pouvant être reliée à l'air ambiant par la deuxième conduite d'arrivée de flux et la première conduite d'arrivée de flux pouvant être fermée par la première soupape et la deuxième conduite d'arrivée de flux pouvant être fermée par la deuxième soupape.

4. Dispositif à filtre (2) selon au moins l'une des revendications 1 à 3,
**caractérisé en ce qu'**un premier et un deuxième élément de retenue sont inclus, le premier élément de choc de pression pouvant être maintenu dans la première position par le premier élément de retenue et le deuxième élément de choc de pression pouvant être maintenu dans la première position par le deuxième élément de retenue.

5. Dispositif à filtre (2) selon la revendication 4,
**caractérisé en ce que** le premier et/ou le deuxième élément de retenue sont réalisés sous la forme d'un ressort.

6. Dispositif à filtre (2) selon la revendication 4,
**caractérisé en ce que** le premier et/ou le deuxième élément de retenue est/sont réalisé(s) sous la forme d'un aimant.

7. Dispositif à filtre (2) selon la revendication 1,
**caractérisé en ce qu'**un premier et un deuxième canal de liaison sont inclus, le premier canal de liaison reliant le dispositif à turbine et la première conduite d'arrivée de flux afin d'augmenter la pression de l'air dans le deuxième espace de la première chambre à l'aide du dispositif à turbine et le deuxième canal de liaison reliant le dispositif à turbine et la deuxième conduite d'arrivée de flux afin d'augmenter la pression de l'air dans le deuxième espace de la deuxième chambre à l'aide du dispositif à turbine.

8. Dispositif à filtre (2) selon la revendication 1,
**caractérisé en ce que** le premier courant d'air principal (8a) peut pénétrer dans le premier espace (23a) de la première chambre (11a) à travers le premier élément filtrant (22a) et peut de nouveau être évacué depuis la première ouverture de sortie de flux (12a).

9. Dispositif à filtre (2) selon la revendication 1,
**caractérisé en ce que** le deuxième courant d'air principal (8b) peut pénétrer dans le premier espace (23b) de la deuxième chambre (11b) à travers le deuxième élément filtrant (22b) et peut de nouveau être évacué depuis la deuxième ouverture de sortie de flux (12b).

10. Dispositif à filtre (2) selon la revendication 1,
**caractérisé en ce que** la première ouverture de sortie de flux (12a) et le premier élément filtrant (22a) sont positionnés au niveau du premier espace (23a) de la première chambre (11a) de telle sorte qu'une dépression qui peut être générée par le premier courant d'air principal (8a) déplace le premier élément de choc de pression (14a) dans la première position, et la deuxième ouverture de sortie de flux (12b) et le deuxième élément filtrant (22b) sont positionnés au niveau du premier espace (23b) de la deuxième chambre (11b) de telle sorte qu'une dépression qui peut être générée par le deuxième courant d'air principal (8b) déplace le deuxième élément de choc de pression (14b) dans la première position.

11. Dispositif à filtre (2) selon la revendication 1,
**caractérisé en ce que** la première ouverture d'arrivée de flux (25a) est positionnée au niveau du deuxième espace (24a) de la première chambre (11a) de telle sorte qu'une pression atmosphérique agissant sur le deuxième espace (24a) de la première chambre (11a) à travers l'ouverture d'arrivée de flux (25a) déplace le premier élément de choc de pression (14a) dans la deuxième position, moyennant quoi une impulsion est transmise du premier élément de choc de pression (14a) au premier élément filtrant (22a) en vue du nettoyage brusque du premier élément filtrant (22a), et la deuxième ouverture d'arrivée de flux (25b) est positionnée au niveau du deuxième espace (24b) de la deuxième chambre (11b) de telle sorte qu'une pression atmosphérique agissant sur le deuxième espace (24b) de la deuxième chambre (11b) à travers la deuxième ouverture d'arrivée de flux (25b) déplace le deuxième élément de choc de pression (14b) dans la deuxième position, moyennant quoi une impulsion est transmise du deuxième élément de choc de pression (14b) au deuxième élément filtrant (22b) en vue du nettoyage brusque du deuxième élément filtrant (22b).

12. Dispositif à filtre (2) selon la revendication 1,
**caractérisé en ce que** le premier élément de choc de pression (14a) et le deuxième élément de choc de pression (14b) peuvent être déplacés en alternance et de manière réversible de la première à la deuxième position en vue du nettoyage en alternance du premier et du deuxième élément filtrant (22a, 22b).
